# EUROPEAN PATENT SPECIFICATION

(11) **EP 1 203 168 B1**
(45) Date of publication and mention of the grant of the patent: **20.10.2004**
(21) Application number: 00941075.4
(22) Date of filing: 07.06.2000
(51) Int. Cl.: F16C 35/063

(54) **BEARING MOUNTING DEVICE**
VORRICHTUNG ZUR MONTAGE EINES WÄLZLAGERS
DISPOSITIF DE MONTAGE DE ROULEMENT

(30) Priority: 11.06.1999 SE 9902200
(43) Date of publication of application: 08.05.2002
(73) Proprietor: Johansson, Frederik, 260 20 Teckomatorp (SE); Zingmark, Mathias, 570 82 Malilla (SE)
(72) Inventor: Johansson, Frederik, 260 20 Teckomatorp (SE); Zingmark, Mathias, 570 82 Malilla (SE)
(74) Representative: Bjelkstam, Peter
(86) International application number: PCT/SE2000/001197
(87) International publication number: WO 2000/077414

(56) References cited:
- EP-A1- 0 424 584
- DE-C- 412 595
- US-A- 1 590 181

## Description

### Field of the Invention

The invention relates to a device for the mounting of a machine element such as a bearing on a shaft journal including an anchorage member fastenable in the shaft journal and to carry bearing, and a driving member to press the machine element or bearing on the shaft journal.

### Prior Art

A usual way to mount a bearing on a shaft journal or a corresponding machine element is to simply locate the bearing on the end of the shaft journal and then strike the bearing in place with a tool. A major problem in this procedure is that the tool hits the bearing, so that the bearing turns over. In that connection, it is inevitable that the bearing is damaged, which results in a considerable shortening of the service life of the bearing.

Particular mounting tools are also found, which are anchored in the shaft journal and press the bearing on by means of a pneumatic cylinder. This type of mounting tool is heavy and clumsy and is, therefore, difficult to use. Another disadvantage of the mounting tool is that access to compressed air is required.

### The Invention in Summary

An object of the invention is to obviate the above-mentioned problems and disadvantages of prior art. The device according to the invention is user- friendlier than previously occurring mounting tools and guarantees an efficient and correct mounting of a machine element such as a bearing on a shaft journal without the need of compressed air or similar source of power. In order to achieve these properties, the device according to the invention has received the features given in claim 1 or in claim 2.

Additional features and advantages of the invention are seen in the following description, drawings and dependent claims.

### Short Description of the Drawings

The invention will now be described more in detail by means of embodiment examples, reference being made to the accompanying drawings, where
- Fig. 1: is a side view partly in section of an embodiment of the device according to the invention with a bearing,
- Fig. 2: is a planar view of the device in Fig. 1, without bearings,
- Fig. 3: is a longitudinal section view of a portion of the device in Fig. 1
- Fig. 4: is a planar view of the device in Fig. 3 and
- Fig. 5: is a side view partly in section of an alternative embodiment of the device according to the invention.

### Description

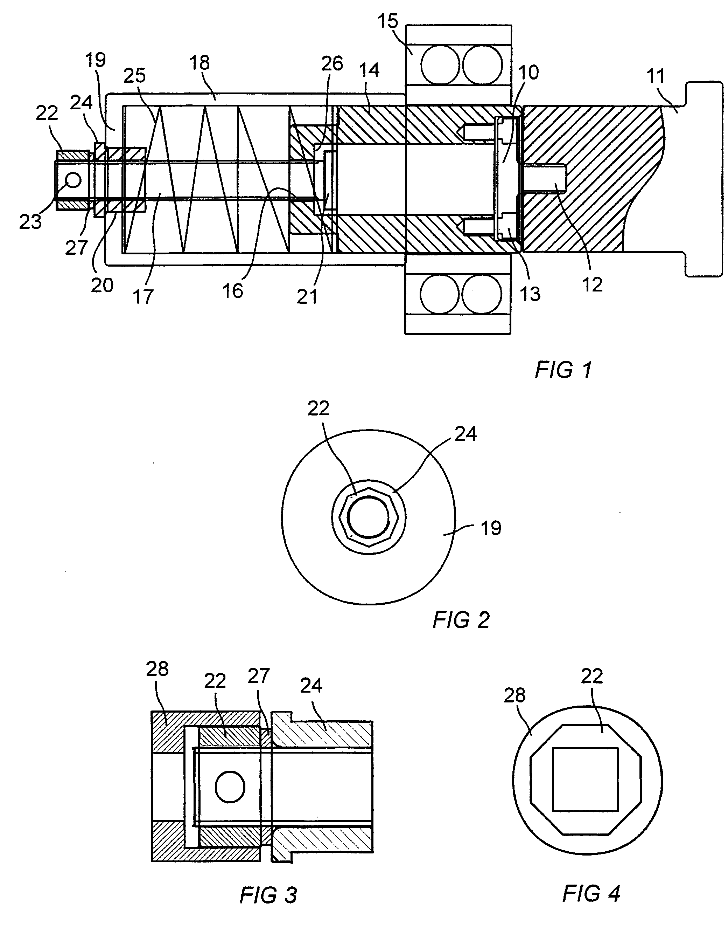

Fig. 1 shows a preferred embodiment of a device according to the invention. An anchorage member 10 comprises a threaded pin 12 connectable to a shaft journal 11. The threaded pin 12 is adapted to a threaded hole made centrally in the shaft journal and may be replaced by another suitable member, which is adjusted to the shaft journal in question. The threaded pin 12 is, via four screws 13, connected to a first end of a cylinder-shaped spacing element 14. The outer diameter of the spacing element 14 equals or is somewhat smaller than the outer diameter of the shaft journal 11, and a bearing 15 is placed on the spacing element before the mounting. A somewhat smaller outer diameter facilitates the application of a bearing on the spacing element 14, since the inner diameter of the bearing is adapted to the outer diameter of the shaft journal.

A second end of the spacing element 14 comprises a radial portion, which is made with a threaded hole 16. In the threaded hole, a bolt 17 is screwed. In the embodiment shown in Fig. 1, the radial portion constitutes a cylinder cover integrated with the spacing element 14, but also other embodiments are feasible within the scope of the invention. The radial portion may consist of a welded cover or a plate attached internally in the spacing element 14.

Externally on the spacing element 14, a press cylinder 18 is arranged. The inner diameter of the press cylinder 18 is somewhat larger than the outer diameter of the spacing element 14, so that the press cylinder 18 may be slidingly displaced over the spacing element. An end of the press cylinder 18 projects outside the spacing element 14. In the projecting end, the press cylinder 18 is, in the embodiment shown, provided with a bottom 19. The press cylinder 18 may also be made with another type of radial portion. The outer diameter of the press cylinder 18 is such that the press cylinder 18 will abut against the inner ball race of the bearing 15 with a ring-shaped surface.

In the bottom 19, a hole 20 is made, through which the bolt 17 extends. The bolt 17 has the head 21 thereof inside the spacing element 14 and protrudes with the opposite free end thereof from the press cylinder 18. On the free end, a nut 22 is screwed. The nut 22 is rigidly connected to the bolt 17 with a tube pin 23 inserted radially through the nut 22 and the bolt 17. At screwing of the bolt 17, the nut 22 will abut against a slide bush 24 arranged in the hole 20, or suitably against a washer 27 arranged between the slide bush 24 and the nut 22.

An end of a screw-wound spring 25 abuts internally against the bottom 19 of the press cylinder 18. An opposite end of the spring 25 abuts against a ring-shaped shoulder of the spacing element 14. The spring 25 holds the press cylinder 18 in the correct position on the spacing element 14.

When using the device according to the invention, a bearing 15 is placed on the spacing element 14 in the position shown in Fig. 1. The bolt 17 is, in that connection, screwed out from the spacing element 14, so that the head 21 of the bolt abuts against a ring-shaped shoulder surface 26 radially outside the threaded hole 16 and internally in the spacing element 14. The device is moved forwards towards a shaft journal 11 and the threaded pin 12 is screwed in the corresponding hole in the end of the shaft journal. A suitable tool is placed above the nut 22 and the nut 22 is turned by means of the tool, and thereby the bolt 17. During the turning, the bolt 17 will be screwed into the spacing element 14 while driving the press cylinder 18. The nut 22 will, during this motion, slide towards the slide bush 24.

When the press cylinder 18 moves towards the shaft journal, it comes to abutment against the bearing 15. During a continued turning of the bolt 17, the bearing 15 will be driven in an axial motion, which results in the bearing sliding in over the shaft journal 11. The press cylinder 18 abuts against the entire periphery of the bearing and will, in that connection, press the bearing forwards in an axial motion without any risk of turning-over or tilting.

The bolt 17 continues to be turned until the bearing 15 has reached the position thereof in the bearing seat. The length of the bolt may, in that connection, be chosen so that the head 21 thereof comes to abutment against the back side of the threaded pin 12.

Then the device is reset by turning the bolt 17 in the opposite direction. During a first part of the motion of the bolt, the press cylinder 18 will be returned across the spacing element 14 and reach the starting position thereof. The head of the bolt 17 abuts in this position against the ring-shaped shoulder surface 26. At continued turning of the bolt 17, the entire anchorage member 10 with the threaded pin 12 and the cylinder-shaped spacing element 14 will be turned together with the bolt 17. Thereby, the pin 12 will be unscrewed from the shaft journal 11 and the entire device is set in starting position for the mounting of a new bearing.

Fig. 2 shows, in a side view seen from the left, the device in Fig. 1. The nut 22 has a conventional hexagonal shape.

In the embodiment according to Fig. 3 and Fig. 4, a sleeve 28 has been arranged over the nut 22. Thereby, it is possible to turn the bolt 17 with a cordless drilling screwdriver or the like. In Fig. 4 is seen that the sleeve 28 is made with a square opening for the connection of a conventional quick-coupling and, e.g., a ratchet or the like.

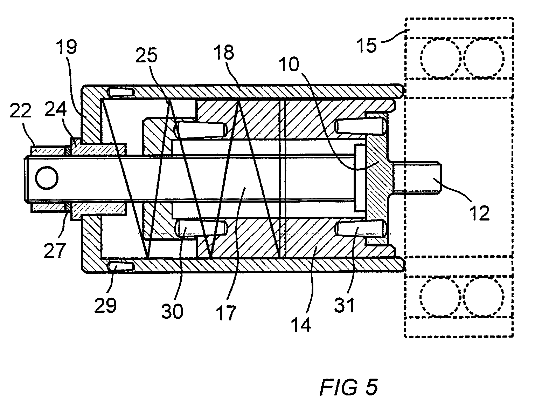

For certain applications, it may be advantageous that the device according to the invention may be adjusted to different shaft diameters and the corresponding. In the embodiment according to Fig. 5, the press cylinder 18 is divided into two parts, whereby the part abutting against the bearing may be replaced by another part having another diameter. The bottom 19 of the press cylinder does not need to be replaceable. The two parts are detachably connected to each other with a first set of cone-shaped dowels 29. At the composition of the parts, the dowels 29 will guarantee a good centring of the parts.

In the similar way, the spacing element 14 is divided into two parts. The part externally carrying the press cylinder 18 is replaceable and may be made with different outer diameters for adjustment to the inner diameter of the press cylinder. The two parts of the spacing element 14 are detachably connected to each other with a second set of cone-shaped dowels 30.

In this embodiment, also the anchorage member 10 is replaceable. As is seen in Fig. 5, a third set of cone-shaped dowels 31 are received in a base portion of the anchorage member 10. The anchorage member 10 may, together with the third set of the cone-shaped dowels 31, be removed from the cylinder-shaped spacing element 14. Another anchorage member 10, e.g. with another screw threading of the threaded pin 12, or with another type of pin, may be put in place to abutment against the spacing element 14 with a new edition of dowels 31 inserted in corresponding recesses of the spacing element 14.

Thus, with the embodiment shown in Fig. 5, the device according to the invention may be adjusted to different shaft diameters, different types of bearings and bearing diameters. The bolt 17 and the other parts constituting a driving unit for applying a machine element on a shaft are normally not replaced at exchange of other parts. The driving unit may be replaced, e.g. if considerable larger shaft diameters are in question. Without particular modifications, the device may be used for shaft diameters in the range of 25-150 mm.

The embodiment in Fig. 5 as well as the embodiment previously described may directly or with only minor modifications be used for mounting of other machine elements than bearings. Other suitable fields of application are cog wheels and chain wheels, which correspondingly are attached to a shaft, or the corresponding element.

## Claims

1. Device for the mounting of a machine element on a shaft journal (11), including an anchorage member (10) fastenable in the shaft journal and to carry a machine element (15), and a driving member to press the machine element on the shaft journal, **characterized in**
that the driving member comprises a press cylinder (18) which is slidable over the anchorage member (10) to abutt against a central part of the machine element (15),
that a threaded bolt (17) is screwed in a threaded hole (16) of the anchorage member,
that the bolt (17) extends in the extension of the shaft journal through the press cylinder (18) and
that an element (22) projecting radially from the bolt (17) abuts against the press cylinder in order to, at turning of the bolt (17), press the press cylinder over and axially past the anchorage member and over the shaft journal (11) while driving the machine element.

2. Device for the mounting of bearings on a shaft journal (11), including an anchorage member (10) fastenable in the shaft journal and to carry a bearing (15), and a driving member to press the bearing on the shaft journal, **characterized in**
that the driving member comprises a press cylinder (18) which is slidable over the anchorage member (10) to abutt against an inner ball race of the bearing (15),
that a threaded bolt (17) is screwed in a threaded hole (16) of the anchorage member,
that the bolt (17) extends in the extension of the shaft journal through the press cylinder (18) and
that an element (22) projecting radially from the bolt (17) abuts against the press cylinder in order to, at turning of the bolt (17), push the press cylinder over and axially past the anchorage member and over the shaft journal (11) while driving the bearing.

3. Device according to claim 1 or 2, wherein a first end of the bolt (17) is provided with a head (21) and a second end of the bolt (17) being rigidly connected to a nut (22).

4. Device according to claim 3, wherein the nut (22) is connected to an end of the bolt (17) projecting from the press cylinder (18).

5. Device according to claim 1 or claim 2, wherein the press cylinder (18) is provided with a bottom portion (19) with a central hole (20) made for the bolt (17).

## Patentansprüche

1. Vorrichtung zum Anbringen eines Maschinenelements an einem Wellenlagerzapfen (11), die ein Verankerungselement (10), das in dem Wellenlagerzapfen zu befestigen ist und ein Maschinenelement (15) tragen soll, und ein Antriebselement umfaßt, um das Maschinenelement auf den Wellenlagerzapfen zu drücken,
**dadurch gekennzeichnet,**
**daß** das Antriebselement einen Druckzylinder (18) aufweist, der über das Verankerungselement (10) schiebbar ist, um gegen einen zentralen Teil des Maschinenelements (15) anzuliegen,
**daß** ein Gewindebolzen (17) in ein Gewindeloch (16) des Verankerungselements geschraubt ist,
**daß** sich der Bolzen (17) in der Verlängerung des Wellenlagerzapfens durch den Druckzylinder (18) erstreckt, und
**daß** ein Element (22), das radial von dem Bolzen (17) vorsteht, radial gegen den Druckzylinder anliegt, um beim Drehen des Bolzens (17) den Druckzylinder über und axial an dem Verankerungselement sowie über den Wellenlagerzapfen (11) zu drücken, während das Maschinenelement angetrieben wird.

2. Vorrichtung zum Anbringen von Wälzlagern an einem Wellenlagerzapfen (11), die ein Verankerungselement (10), das in dem Wellenlagerzapfen zu befestigen ist und ein Wälzlager (15) tragen soll, und ein Antriebselement umfaßt, um das Wälzlager auf den Wellenlagerzapfen zu drücken, **dadurch gekennzeichnet, daß** das Antriebselement einen Druckzylinder (18) aufweist, der über das Verankerungselement (10) schiebbar ist, um gegen einen zentralen Teil des Wälzlagers (15) anzuliegen,
daß ein Gewindebolzen (17) in ein Gewindeloch (16) des Verankerungselements geschraubt ist,
daß sich der Bolzen (17) in der Verlängerung des Wellenlagerzapfens durch den Druckzylinder (18) erstreckt, und
daß ein Element (22), das radial von dem Bolzen (17) vorsteht, radial gegen den Druckzylinder anliegt, um beim Drehen des Bolzens (17) den Druckzylinder über und axial an dem Verankerungselement sowie über den Wellenlagerzapfen (11) zu drücken, während das Wälzlager angetrieben wird.

3. Vorrichtung nach Anspruch 1 oder 2, bei welcher ein erstes Ende des Bolzens (17) mit einem Kopf (21) versehen ist und ein zweites Ende (17) mit einer Mutter (22) starr verbunden ist.

4. Vorrichtung nach Anspruch 3, bei welcher die Mutter mit einem Ende des Bolzens (17) verbunden ist, das von dem Druckzylinder (18) vorsteht.

5. Vorrichtung nach Anspruch 1 oder Anspruch 2, bei welcher der Druckzylinder (18) mit einem Bodenabschnitt (19) mit einem zentralen Loch (20) versehen ist, das für den Bolzen (17) gemacht ist.

## Revendications

1. Dispositif pour le montage d'un élément de machine sur un pivot (11) d'arbre, comportant un élément (10) d'ancrage pouvant être fixé dans le tourillon d'arbre et pour porter un élément (15) de machine, et un élément d'entraînement pour serrer l'élément de machine sur le tourillon d'arbre, **caractérisé en ce que**
l'élément d'entraînement comporte un cylindre (18) de serrage qui peut coulisser sur l'élément (10) d'ancrage pour buter contre une partie centrale de l'élément (15) de machine,
**en ce qu'**un boulon (17) fileté est vissé dans un trou (16) taraudé de l'élément d'ancrage,
**en ce que** le boulon (17) s'étend dans le prolongement du tourillon d'arbre en passant par le cylindre (18) de serrage, et
**en ce qu'**un élément (22) faisant saillie radialement du boulon (17) vient buter contre le cylindre de serrage afin, lorsque l'on tourne le boulon (17), de serrer le cylindre de serrage sur l'élément d'ancrage et axialement au-delà de celui-ci et sur le tourillon (11) d'arbre et axialement au-delà de celui-ci, tout en entraînant l'élément de machine.

2. Dispositif pour le montage de paliers sur un tourillon (11) d'arbre, comportant un élément (10) d'ancrage pouvant être fixé dans le tourillon d'arbre et pour porter un palier (15), et un élément d'entraînement pour serrer le palier sur le tourillon d'arbre, **caractérisé en ce que**
l'élément d'entraînement comporte un cylindre (18) de serrage, qui peut coulisser sur l'élément (10) d'ancrage pour buter contre une portée de bille intérieure du palier (15),
**en ce qu'**un boulon (17) fileté est vissé dans un trou (16) taraudé de l'élément d'ancrage,
**en ce que** le boulon (17) s'étend dans le prolongement du tourillon d'arbre en passant par le cylindre (18) de serrage,
**en ce qu'**un élément (22) faisant saillie radialement du boulon (17) vient buter contre le cylindre de serrage afin, lorsque le boulon (17) tourne, de pousser le cylindre de serrage sur l'élément d'ancrage et axialement au-delà de l'élément d'ancrage et sur le palier (11) d'arbre tout en entraînant le palier.

3. Dispositif suivant la revendication 1 ou 2, dans lequel une première extrémité du boulon (17) est munie d'une tête (21) et une deuxième extrémité du boulon (17) est reliée de manière rigide à un écrou (22).

4. Dispositif suivant la revendication 3, dans lequel l'écrou (22) est relié à une extrémité du boulon (17) faisant saillie du cylindre (18) de serrage.

5. Dispositif suivant la revendication 1 ou 2, dans lequel le cylindre (18) de serrage est muni d'une partie (19) de fond ayant un trou (20) central réalisé pour le boulon (17).
